# EUROPÄISCHE PATENTSCHRIFT

(11) **EP 2 321 546 B1**
(45) Veröffentlichungstag und Bekanntmachung des Hinweises auf die Patenterteilung: **10.09.2014**
(21) Anmeldenummer: 09781110.3
(22) Anmeldetag: 27.07.2009
(51) Int. Cl.: B60W 20/00, B60W 50/02, F16D 48/10, B60K 6/52

(54) **VORRICHTUNG UND VERFAHREN ZUM BETRIEB EINES ANTRIEBES MIT EINER ELEKTRISCH ANTREIBBAREN ACHSE**
APPARATUS AND METHOD FOR OPERATING A DRIVE HAVING AN ELECTRICALLY DRIVABLE AXLE
DISPOSITIF ET PROCÉDÉ POUR FAIRE FONCTIONNER UN ENTRAÎNEMENT COMPRENANT UN ESSIEU POUVANT ÊTRE ENTRAÎNÉ ÉLECTRIQUEMENT

(30) Priorität: 12.09.2008 DE 102008042048
(43) Veröffentlichungstag der Anmeldung: 18.05.2011
(73) Patentinhaber: Robert Bosch GmbH, 70442 Stuttgart (DE)
(72) Erfinder: AHNER, Peter, 71032 Boeblingen (DE)
(86) Internationale Anmeldenummer: PCT/EP2009/059646
(87) Internationale Veröffentlichungsnummer: WO 2010/028905

(56) Entgegenhaltungen:
- EP-A- 1 167 104
- EP-A- 1 506 890
- EP-A- 1 818 236
- US-A1- 2002 134 634
- US-A1- 2003 062 206

## Beschreibung

### Stand der Technik

Die Erfindung betrifft eine Vorrichtung und ein Verfahren zum Betrieb eines Antriebes mit einer elektrisch antreibbaren Achse, beispielsweise in einem Hybridfahrzeug. Fahrzeuge mit einer hybriden Antriebsstruktur weisen mindestens zwei Antriebsaggregate auf. Meist sind dies ein Verbrennungsmotor und mindestens ein Elektromotor. Aber auch der Einsatz anderer Antriebsaggregate, wie beispielweise Hydraulikmotoren, ist möglich. So kann das Antriebsmoment während des Fahrbetriebes des Hybridfahrzeuges von beiden Antriebsaggregaten oder auch nur von einem einzelnen aufgebracht werden. Aus der EP 0 224 144 A1 ist ein Fahrzeug bekannt, welches eine herkömmliche, durch ein Verbrennungsmotor antreibbare, Hauptantriebsachse aufweist. Bei erhöhtem Schlupf der Räder der Hauptantriebsachse können die Räder einer zuschaltbaren Antriebsachse mittels eines gesonderten Zusatzantriebaggregates, insbesondere eines Elektromotors, automatisch angetrieben werden.

Aus der US 2002/134634 ist ein Getriebe für Hybridfahrzeuge bekannt, welches die Leistung der Brennkraftmaschine oder des elektrischen Antriebes überträgt. Das Getriebe umfasst einen Freilauf, der mittels eines Elektromagneten angesteuert wird.

Aus der EP 1167 104 ist ein Hybridfahrzeug mit einem mit einem Verbrennungsmotor verbundenen Freilauf und einer angeschlossenen Fehlerdetektion bekannt. Die Fehlerdetektion erkennt einen Fehler in dem Freilauf, wenn die Geschwindigkeit des Verbrennungsmotors negativ ist.

### Offenbarung der Erfindung

Die erfindungsgemäße Vorrichtung für ein Fahrzeug welches eine elektrische Maschine und eine, von dieser elektrischen Maschine, antreibbare Achse aufweist, ist dadurch gekennzeichnet, dass die trennbare mechanische Kopplung zwischen der antreibbaren Achse und der elektrischen Maschine als einfaches robustes mechanisches Bauteil ausgeführt ist. Diese trennbare mechanische Kopplung ist als schaltbarer Freilauf ausgeführt. Technischer Hintergrund dieser Ausgestaltung ist, dass die elektrische Maschine von der antreibbaren Achse abgetrennt werden kann. Die Trennung der elektrischen Maschine von der antreibbaren Achse erfolgt mittels eines schaltbaren Freilaufs. Dieser kann sich in einer von zwei Übertragungspositionen befinden. In der einen Übertragungsposition wird ein Drehmoment von der antreibbaren Achse auf die elektrische Maschine übertragen, in der anderen Übertragungsposition wird ein Drehmoment von der elektrischen Maschine auf die antreibbare Achse übertragen. In beiden Fällen werden die antreibende und die angetriebene Welle automatisch voneinander getrennt, sobald die angetriebene Welle eine höhere Drehzahl als die antreibende Welle aufweist. Eventuell notwendige Synchronisationen beim Wechseln der Übertragungspositionen werden mittels der elektrischen Maschine durchgeführt. Vorteile dieser Ausgestaltung ist, dass eine robuste, wartungs- und verschleißfreie und preisgünstige Bauart als Kupplung einsetzbar wird. In verschiedenen Fahrsituationen eines Hybridfahrzeugs ist es vorteilhaft, die elektrische Maschine von der Hinterachse zu trennen. Beispielsweise kann eine elektrische Maschine bei hohen Drehzahlen kein nennenswertes Drehmoment abgeben. Wenn zwischen elektrischer Maschine und der antreibbaren Achse kein Getriebe angeordnet ist, beispielweise aus Platz- oder aus Kostengründen, so ist es energetisch vorteilhaft, die elektrische Maschine bei hohen Drehzahlen von der Antriebsachse abzukoppeln, um ein verlustbehaftetes Mitdrehen der elektrischen Maschine zu vermeiden. Aus dem gleichen Grund ist es vorteilhaft, beim Rollen des Fahrzeugs, die elektrische Maschine von der angetriebenen Achse zu trennen. Erfindungsgemäß ist vorgesehen, dass die Vorrichtung Mittel umfasst, die zur Durchführung eines Überwachungskonzeptes geeignet sind. Technischer Hintergrund hierfür ist, dass in einem Fehlerfall des Freilaufs oder auch des elektrischen Antriebs eine Fehlerreaktion durchgeführt wird. Daraus ergibt sich der erfindungsgemäße Vorteil, dass ein sicherer Betrieb des Fahrzeugs gewährleistet wird.

Erfindungsgemäß wird die Sperrrichtung in Abhängigkeit des Betriebszustandes des Fahrzeugs angesteuert, und in Abhängigkeit des Betriebszustandes des Fahrzeugs und in Abhängigkeit des Freilaufzustandes werden unterschiedliche Fehlerreaktionen ausgeführt. Technischer Hintergrund dieser Ausgestaltung ist die Berücksichtigung der unterschiedlichen Fehlerfolgen, die in Abhängigkeit des Betriebszustandes des Fahrzeuges und in Abhängigkeit des Freilaufzustandes auftreten. Beispielsweise kann bei Vorwärtsfahrt der nicht aktivierte Steuerkäfig als sicherer Betriebszustand bezeichnet werden, da es in diesem Fall nicht möglich ist, ein Drehmoment der elektrischen Maschine auf die antreibbare Achse zu übertragen. Über Rückstellfedern wird der Freilauf bei nicht aktivem Aktor selbsttätig auf die Momentenübertragung des Betriebszustands des Fahrzeugs "Rekuperieren" (Achse treibt elektrische Maschine) eingestellt. Die Momentenübertragung während des Betriebszustandes des Fahrzeugs "Beschleunigen" (elektrische Maschine treibt die Achse an) wird durch den aktiv betätigten Steuerkäfig nur dann zugelassen, wenn die elektrische Maschine im Motorbetrieb ist. Die Umschaltung erfolgt mit oder unmittelbar bevor der Motorbetrieb eingeschaltet wird. Bei Rückwärtsfahrt kehren sich die Verhältnisse um. Für den sicheren Betriebszustand muss hier der Steuerkäfig aktiviert werden, damit kein Drehmoment der elektrischen Maschine auf die antreibbare Achse übertragen werden kann. Vorteilhaft wird mit diesem Verfahren ein Überwachungskonzept für ein Fahrzeug zur Verfügung gestellt. In Abhängigkeit des Betriebszustandes des Fahrzeugs und des Freilaufzustandes werden unterschiedliche Fehlerreaktionen ausgeführt, die einen weiteren sicheren Betrieb des Fahrzeuges gewährleisten.

In einer Weiterbildung der Erfindung ist vorgesehen, dass die Sperrrichtung des schaltbaren Freilaufes mittels eines Aktors angesteuert werden kann. Damit wird ermöglicht, dass mittels eines Aktors der schaltbare Freilauf so angesteuert werden kann, dass er in eine vorgebbare Übertragungsposition überführt wird. Somit wird vorgegeben, ob ein Drehmoment von der antreibbaren Achse auf die elektrische Maschine, oder umgekehrt, übertragen wird. Der Aktor verschiebt dazu eine Nabe bei möglicher Einspurdrehzahl von Freilaufgehäuse und Nabe auf der Keilwelle, bis sie vollständig in den Klemmkörper eingespurt ist. Dabei ist vorgesehen, dass die beiden Klemmkörper gegensätzliche Sperrrichtungen aufweisen. Dadurch wird ermöglicht, dass der Freilauf in die Position "Beschleunigen" und "Rekuperieren" gebracht werden kann. Hierzu können Aktoren verwendet werden, wie sie sich z. B. bei automatisierten Schaltgetrieben im Einsatz befinden. Bei Beschleunigungsvorgängen des Fahrzeugs wird der Freilauf so geschaltet, dass ein Momentenfluss von der elektrischen Maschine auf die Achse möglich ist. Ist die elektrische Maschine bei steigender Drehzahl nicht mehr in der Lage, mehr Moment abzugeben, als für ihre eigene Beschleunigung notwendig ist, so würde sie über die sich drehende Antriebsachse beschleunigt werden. In diesem Moment löst der Freilauf und koppelt die elektrische Maschine ab, sodass kein Antriebsmoment von der sich drehenden Antriebsachse auf die elektrische Maschine übertragen wird. In diesem Fall kann die elektrische Maschine abgebremst werden. Insbesondere kann während des Abbremsvorganges deren Rotationsenergie rekuperiert werden. Bei Rekuperationsvorgängen des Fahrzeugs ist der Freilauf so geschaltet, dass ein Moment von der sich drehenden Antriebsachse in Richtung elektrische Maschine übertragen wird. Um den Umschaltvorgang von "Beschleunigen" auf "Rekuperieren" (oder umgekehrt) ruckfrei vornehmen zu können, muss die elektrische Maschine auf eine Drehzahl gleich oder geringfügig über der Drehzahl der antreibbaren Achse beschleunigt werden, um den Freilauf einzuspuren. Vorteilhaft an dieser Ausgestaltung ist, dass ein robustes wartungs- und verschleißfreies und preisgünstiges Maschinenelement als Kupplung einsetzbar wird. Die Ansteuerung beschränkt sich auf das steuerbare Umschalten der Sperrrichtung des schaltbaren Freilaufs. Eine aufwendige Momentenregelung einer Kupplung entfällt dadurch.

In einer weiteren Weiterbildung der Erfindung ist vorgesehen, dass der Aktor aktiv betrieben wird, um die Sperrrichtung des schaltbaren Freilaufes für den Betriebszustand "Beschleunigen" anzusteuern. Wenn der Aktor nicht betrieben wird, wird selbsttätig die Sperrrichtung des schaltbaren Freilaufes für den Betriebszustand "Rekuperieren" angesteuert. Technischer Hintergrund dieser Ausgestaltung ist, dass der Steuerkäfig des Freilaufes aktiv mittels des Aktors verschoben wird, um den schaltbaren Freilauf für den Betriebszustand "Beschleunigen" anzusteuern. In diesem Fall wird die Sperrrichtung des schaltbaren Freilaufs derart angesteuert, dass eine Übertragung eines Drehmomentes von der elektrischen Maschine auf die antreibbare Achse möglich ist. Mittels Rückstellfedern verschiebt sich der Steuerkäfig bei nicht aktiviertem Aktor so, dass der schaltbare Freilauf für den Betriebszustand "Rekuperieren" angesteuert wird. In diesem Fall wird die Sperrrichtung des schaltbaren Freilaufs derart angesteuert, dass eine Übertragung eines Drehmomentes von der antreibbaren Achse auf die elektrische Maschine möglich ist. Vorteil dieser Ausgestaltung ist, dass ein unidirektionaler Aktor zur Ansteuerung des Freilaufes ausreicht.

Das erfindungsgemäße Verfahren zur Durchführung eines Überwachungskonzeptes für ein Fahrzeug, welches eine elektrische Maschine, und eine, von dieser elektrischen Maschine, antreibbare Achse aufweist, wobei eine trennbare mechanische Kopplung zwischen der antreibbaren Achse und der elektrischen Maschine vorgesehen ist, ist dadurch gekennzeichnet, dass die mechanische Kopplung als schaltbarer Freilauf ausgebildet ist, und dessen Sperrrichtung in Abhängigkeit des Betriebszustandes des Fahrzeugs angesteuert wird, und dass in Abhängigkeit des Betriebszustandes des Fahrzeugs und in Abhängigkeit des Freilaufzustandes unterschiedliche Fehlerreaktionen ausgeführt werden. Technischer Hintergrund dieser Ausgestaltung ist die Berücksichtigung der unterschiedlichen Fehlerfolgen, die in Abhängigkeit des Betriebszustandes des Fahrzeuges und in Abhängigkeit des Freilaufzustandes auftreten. Beispielsweise kann bei Vorwärtsfahrt der nicht aktivierte Steuerkäfig als sicherer Betriebszustand bezeichnet werden, da es in diesem Fall nicht möglich ist, ein Drehmoment der elektrischen Maschine auf die antreibbare Achse zu übertragen. Über Rückstellfedern wird der Freilauf bei nicht aktivem Aktor selbsttätig auf die Momentenübertragung des Betriebszustands des Fahrzeugs "Rekuperieren" (Achse treibt elektrische Maschine) eingestellt. Die Momentenübertragung während des Betriebszustandes des Fahrzeugs "Beschleunigen" (elektrische Maschine treibt die Achse an) wird durch den aktiv betätigten Steuerkäfig nur dann zugelassen, wenn die elektrische Maschine im Motorbetrieb ist. Die Umschaltung erfolgt mit oder unmittelbar bevor der Motorbetrieb eingeschaltet wird. Bei Rückwärtsfahrt kehren sich die Verhältnisse um. Für den sicheren Betriebszustand muss hier der Steuerkäfig aktiviert werden, damit kein Drehmoment der elektrischen Maschine auf die antreibbare Achse übertragen werden kann. Vorteilhaft wird mit diesem Verfahren ein Überwachungskonzept für ein Fahrzeug zur Verfügung gestellt. In Abhängigkeit des Betriebszustandes des Fahrzeugs und des Freilaufzustandes werden unterschiedliche Fehlerreaktionen ausgeführt, die einen weiteren sicheren Betrieb des Fahrzeuges gewährleisten.

Eine weitere Weiterbildung der Erfindung ist dadurch gekennzeichnet, dass das Verfahren mindestens die Betriebszustände des Fahrzeugs "Beschleunigen" und "Rekuperieren" und die Freilaufzustände "Freilauf schließt nicht" und "Freilauf klemmt" erkennt. Technischer Hintergrund dieser Ausgestaltung der Erfindung ist, dass die Betriebszustände erkannt werden, während denen ein Drehmoment von der elektrischen Maschine auf die antreibbare Achse oder umgekehrt übertragen wird. Die sind relevante Betriebszustände des Fahrtzeug, da der Beschleunigungsvorgang mittels der elektrischen Maschine unterstützt wird, insbesondere bei niedrigeren Drehzahlen der angetriebenen Achse. Während des Betriebszustandes "Rekuperieren", wird ebenfalls die elektrische Maschine an die antreibbare Achse angekoppelt. Jedoch wird in diesem Fall ein Drehmoment der sich drehenden Achse auf die elektrische Maschine übertragen, welche somit Bewegungsenergie des Fahrzeugs rekuperieren kann. Vorteil dieser Ausgestaltung ist, dass die elektrische Maschine das Fahrzeug während des Betriebszustandes "Beschleunigen" effizient unterstützt und während des Betriebszustandes des Fahrzeuges "Rekuperieren" kinetische Energie des Fahrzeugs mittels der elektrischen Maschine in elektrische Energie umgewandelt wird. Weiter werden die Freilaufzustände erkannt, die eine Fehlfunktion des Freilaufes kennzeichnen. Vorteil dieser Ausgestaltung in Form eines Überwachungskonzeptes ist, dass durch Erkennen dieser Betriebszustände des Fahrzeugs und des Freilaufes ein sicherer Betrieb des Fahrzeuges gewährleistet werden kann.

Eine weitere Weiterbildung des Verfahrens ist dadurch gekennzeichnet, dass während des Betriebszustands des Fahrzeugs "Rekuperieren" der Freilaufzustand "Freilauf schließt nicht" derart erkannt wird, dass die Drehzahl der elektrischen Maschine, insbesondere bei elektrischer Belastung nicht mit der Drehzahl der antreibbaren Achse korreliert. Technischer Hintergrund dieser Ausgestaltung ist, dass während des Betriebszustandes des Fahrzeugs "Rekuperieren" ein Drehmoment von der antreibbaren Achse auf die elektrische Maschine übertragen werden soll. Wenn der Freilauf wunschgemäß funktioniert und damit geschlossen ist, weist die elektrische Maschine entweder die gleiche Drehzahl wie die antreibbare Achse, oder eine Drehzahl in einem bestimmten Übersetzungsverhältnis dazu, auf. Wenn die Drehzahl der elektrischen Maschine nicht derart mit der antreibbaren Achse korreliert, ist das ein Zeichen dafür, dass der Freilauf nicht schließt. Es wird demnach nicht wunschgemäß das Moment der antreibbaren Achse auf die elektrische Maschine übertragen. Vorteil dieser Ausgestaltung ist, dass ein fehlerhafter Freilaufzustand erkannt werden kann. Dieser kann beispielweise eine Fehlerreaktion auslösen, die einen sicheren weiteren Betrieb des Fahrzeugs gewährleistet.

Eine weitere Weiterbildung der Erfindung ist dadurch gekennzeichnet, dass während des Betriebszustandes des Fahrzeugs "Rekuperieren" der Freilaufzustand "Freilauf klemmt" derart erkannt wird, dass bei kurzzeitigem Motorbetrieb der elektrischen Maschine deren Drehzahl mit der Drehzahl der antreibbaren Achse korreliert. Technischer Hintergrund dieser Ausgestaltung ist, dass bei korrekt öffnendem Freilauf sich die Maschinendrehzahl im Motorbetrieb erhöhen würde. Wenn jedoch die Drehzahl der antreibbaren Achse mit der Drehzahl der elektrischen Maschine korreliert, deutet das darauf hin, dass der Freilauf nicht bestimmungsgemäß öffnet. Vorteil dieser Ausgestaltung ist, dass ein fehlerhafter Freilaufzustand erkannt werden kann. Dieser kann beispielweise eine Fehlerreaktion auslösen, die einen sicheren weiteren Betrieb des Fahrzeugs gewährleistet.

Eine weitere Weiterbildung der Erfindung ist dadurch gekennzeichnet, dass der kurzzeitige Motorbetrieb in periodischen Abständen bei unkritischen Fahrsituationen durchgeführt wird. Technischer Hintergrund dieser Ausgestaltung ist, dass bei unkritischen Fahrzuständen (geringe Fahrzeugquer- oder - längsbeschleunigung bzw. Abbremsung) kurzzeitig in den Motorbetrieb geschaltet wird, ohne dass der Steuerkäfig auf "Beschleunigen" umgeschaltet wird. Dieser kurzzeitige Motorbetrieb wird nur bei unkritischen Fahrsituationen durchgeführt um die Fahrdynamik des Fahrzeugs nichts zu gefährden. Vorteil dieser Ausgestaltung ist, dass ein sicherer Betrieb des Fahrzeugs auch während des kurzzeitigen Motorbetriebes weiterhin möglich ist und die Fahrdynamik nicht beeinflusst wird.

In einer weiteren Weiterbildung der Erfindung ist vorgesehen, dass das Verfahren während des Betriebszustandes des Fahrzeugs "Rekuperieren" und bei Vorliegen eines Ereignissignals ein Bremsmoment an der antreibbaren Achse erzeugt wird, und der Aktor betrieben wird, um die Sperrrichtung des schaltbaren Freilaufes für den Betriebszustand "Beschleunigen" anzusteuern. Technischer Hintergrund dieser Ausgestaltung ist, dass während des Betriebszustandes des Fahrzeugs "Rekuperieren" ein zu hohes Bremsmoment, welches insbesondere durch die elektrische Maschine verursacht wird, zu Schlupf an den Antriebsrädern der antreibbaren Achse führt. Dies kann zu einem instabilen fahrdynamischen Fahrverhalten (z.B. Schleudern) des Fahrzeugs führen. Das zu hohe Bremsmoment kann beispielsweise durch einen Fehler im elektrischen Antrieb, insbesondere durch Kurzschliessen der elektrischen Maschine, verursacht sein. Während dieser Situation wird ein hohes Drehmoment über den Freilauf übertragen und ein Umschaltvorgang von "Rekuperieren" auf "Beschleunigen" ist daher nicht möglich. Um den Umschaltvorgang zu ermöglichen muss das über den Freilauf zu übertragende Drehmoment minimiert oder dessen Richtung geändert werden. Dazu wird die antreibbare Achse, beispielweise mittels der Bremsen der an der antreibbaren Achse angebrachten Antriebsräder, kurz und stark abgebremst. In diesem Moment wird mittels des Aktors der schaltbare Freilauf für den Betriebszustand "Beschleunigen" umgeschaltet und das fehlerhafte Bremsmoment von der antreibbaren Achse entkoppelt. Die Antriebsräder beschleunigen anschließend über die Fahrstraße. Mittels der wieder vorhandenen Haftreibungskraft ist ein fahrdynamisch sicherer Betrieb möglich. Die kurze Abbremsung der antreibbaren Achse erfolgt als Reaktion auf das Vorliegen eines Ereignissignals. Das Ereignissignal wird von einem Steuergerät abgegeben, wenn ein Fehler im elektrischen Antrieb( insbesondere ein hohes Bremsmoment an der antreibbaren Achse, welches nicht durch die Bremsen der Antriebsräder verursacht ist) diagnostiziert, die elektrische Maschine ein hohes Bremsmoment aufweist, und/oder bevor die elektrische Maschine kurzgeschlossen wird. Vorteil dieser Ausgestaltung ist, dass dadurch ein sicherer Betrieb des Fahrzeugs auch bei hohem Bremsmoment der elektrischen Maschine gewährleistet wird.

Eine weitere Weiterbildung der Erfindung ist dadurch gekennzeichnet, dass das Verfahren während des Betriebszustandes des Fahrzeugs "Beschleunigen" den Freilaufzustand "Freilauf schließt nicht" derart erkennt, dass die Drehzahl der elektrischen Maschine schnell ansteigt, insbesondere nicht mit der Drehzahl der antreibbaren Achse korreliert. Technischer Hintergrund dieser Ausgestaltung ist, dass der fehlerhafte Freilaufzustand "Freilauf schließt nicht" dadurch erkannt wird, dass die Drehzahl der lastfrei hochlaufenden elektrischen Maschine sehr schnell ansteigt. Das schnelle Ansteigen der Drehzahl der elektrischen Maschine lässt sich insbesondere dadurch erkennen, dass die Drehzahl der elektrischen Maschine nicht mit der Drehzahl der antreibbaren Achse korreliert. Der nicht schließende Freilauf ermöglicht es nicht, ein Drehmoment der elektrischen Maschine an die antreibbare Achse abzugeben. Vorteil dieser Ausgestaltung ist, dass ein fehlerhafter Freilaufzustand erkannt werden kann. Dieser kann beispielweise eine Fehlerreaktion auslösen, die einen sicheren weiteren Betrieb des Fahrzeugs gewährleistet.

Eine weitere Weiterbildung der Erfindung ist dadurch gekennzeichnet, dass das Verfahren während des Betriebszustandes des Fahrzeugs "Beschleunigen" den Freilaufzustand "Freilauf klemmt" derart erkennt, dass bei kurzzeitigem Motorbetrieb der elektrischen Maschine deren Drehzahl nicht zunimmt, insbesondere mit der Drehzahl der antreibbaren Achse korreliert, wobei der Aktor dabei kurzzeitig nicht betrieben wird, um die Sperrrichtung des schaltbaren Freilaufes für den Betriebszustand des Fahrzeugs "Rekuperieren" anzusteuern. Technischer Hintergrund dieser Ausgestaltung ist, dass trotzdem der Aktor kurzzeitig nicht betrieben wird, um die Sperrrichtung des schaltbaren Freilaufes für den Betriebszustand des Fahrzeugs "Rekuperieren" anzusteuern, bei kurzzeitigem Motorbetrieb der elektrischen Maschine deren Drehzahl nicht zunimmt. Dies deutet darauf hin, dass dennoch die elektrische Maschine ein Drehmoment an die antreibbare Achse abgibt. Das bedeutet wiederum, dass der Freilauf nicht bestimmungsgemäß öffnet. Solange der Verbrennungsmotor in Betrieb ist, wird die Auswirkung auf das Fahrzeug über eine entsprechende Ansteuerung des Verbrennungsmotors kompensiert. In Rekuperationsphasen bei stillgesetztem Verbrennungsmotor ist der Freilauftest in sehr kurzer Zeitdauer durchzuführen, z.B. in 30-50ms. Über Spiele im Antriebsstrang wird dann die Auswirkung vom Fahrer nur schwach wahrgenommen. Vorteil dieser Ausgestaltung ist, dass ein fehlerhafter Freilaufzustand erkannt werden kann. Dieser kann beispielweise eine Fehlerreaktion auslösen, die einen sicheren weiteren Betrieb des Fahrzeugs gewährleistet.

Eine weitere Weiterbildung der Erfindung ist dadurch gekennzeichnet, dass mindestens während der Freilaufzustände "Freilauf schließt nicht" und "Freilauf klemmt" als Fehlerreaktion eine Fehlermeldung ausgegeben wird und/oder eine entsprechende Eintragung im Fehlerspeicher vorgenommen wird. Technischer Hintergrund und Vorteil ist, dass bei diesen sicherheitsrelevanten Fehlern "Freilauf schließt nicht" und "Freilauf klemmt" eine Fehlermeldung ausgegeben wird, um den Fahrer entsprechend zu warnen und/oder eine entsprechende Eintragung im Fehlerspeicher vorgenommen wird, um eine Fehlerdiagnose bei einer späteren Inspektion des Fahrzeugs zu ermöglichen.

Eine weitere Weiterbildung der Erfindung ist dadurch gekennzeichnet, dass während des Betriebszustandes des Fahrzeugs "Rekuperieren" und dem Freilaufzustand "Freilauf schließt nicht" als Fehlerreaktion eine Fehlermeldung an den Fahrer ausgegeben wird. Technischer Hintergrund ist, dass bei diesem Fehler eine Fehlermeldung an den Fahrer ausreicht, da ein weiterer sicherer Betrieb gewährleistet wird. Vorteilhaft ist, dass der Fahrer informiert wird, dass die kinetische Energie des Fahrzeugs nicht mehr rekuperiert werden kann und dadurch die Batterie nicht mehr nachgeladen wird. Somit wird der Fahrer darauf hingewiesen, dass nur noch eine eingeschränkte Reichweite des Fahrzeugs möglich ist, insbesondere wenn das Bordnetz aus der Traktionsbatterie versorgt wird, auf die der Fahrer hingewiesen wird.

Eine weitere Weiterbildung der Erfindung ist dadurch gekennzeichnet, dass während des Betriebszustandes des Fahrzeugs "Rekuperieren" und dem Freilaufzustand "Freilauf klemmt" als Fehlerreaktion ein erster Notbetrieb bei stark eingeschränkter Geschwindigkeit einstellt wird. Technischer Hintergrund ist, dass bei diesem Fehler die elektrische Maschine nicht mehr von der antreibbaren Achse trennbar ist und dennoch ein sicherer Betrieb des Fahrzeugs gewährleistet werden muss. Der weitere Betrieb des Fahrzeuges kann zu einer Überlastung des elektrischen Systems führen. Mittels des Notbetriebes kann die Schädigung des elektrischen Systems vorteilhaft vermieden werden.

Eine weitere Weiterbildung der Erfindung ist dadurch gekennzeichnet, dass während des Betriebszustandes des Fahrzeugs "Beschleunigen" und dem Freilaufzustand "Freilauf schließt nicht" als Fehlerreaktion ein zweiter Notbetrieb einstellt wird. Technischer Hintergrund ist, dass bei diesem Fehler die elektrische Maschine nicht an die antreibbare Achse ankoppelbar ist. Eine Unterstützung des Antriebs mittels der elektrischen Maschine, insbesondere elektrisch fahren und Boosten, ist nicht mehr möglich. Dadurch verringert sich das Beschleunigungsvermögen und die Höchstgeschwindigkeit des Fahrzeugs. Darüberhinaus bleibt die Generatorfunktion erhalten. Es findet keine entsprechende Entladung der Batterie statt, entsprechend ist auch die Ladestrategie bei der weiteren Fahrt anzupassen. Über diesen Betriebszustand wird der Fahrer vorteilhaft informiert und die Betriebssteuerung in Form eines zweiten Notbetriebes darauf eingestellt. Die Beschränkung der Fahrgeschwindigkeit kann, muss aber nicht erfolgen.

Eine weitere Weiterbildung der Erfindung ist dadurch gekennzeichnet, dass während des Betriebszustandes des Fahrzeugs "Beschleunigen" und dem Freilaufzustand "Freilauf klemmt" als Fehlerreaktion ein erster Notbetrieb bei stark eingeschränkter Geschwindigkeit eingestellt wird. Technischer Hintergrund ist, dass bei diesem Fehler die elektrische Maschine nicht mehr von der antreibbaren Achse trennbar ist. Für den sicheren Betrieb des Fahrzeuges muss gewährleistet sein, dass die elektrische Maschine jederzeit von der antreibbaren Achse abtrennbar ist. Mittels des Notbetriebes bei stark eingeschränkter Geschwindigkeit kann das Fahrzeug vorteilhaft bis zur nächsten Werkstatt gefahren werden.

Die genannten Ausführungsformen der Erfindungen beziehen sich auf die Vorrichtung und das Verfahren bei Vorwärtsfahrt des Fahrzeugs. Bei Rückwärtsfahrt wird der Aktor für den Betriebszustand des Fahrzeuges "Rekuperieren" aktiv betrieben und für den Betriebszustand des Fahrzeuges "Beschleunigen" nicht betrieben. Entsprechend werden auch die Fehlerreaktionen des Überwachungskonzeptes bei Rückwärtsfahrt bzgl. der Betriebszustände des Fahrzeugs vertauscht.

### Ausführungsbeispiele der Erfindung

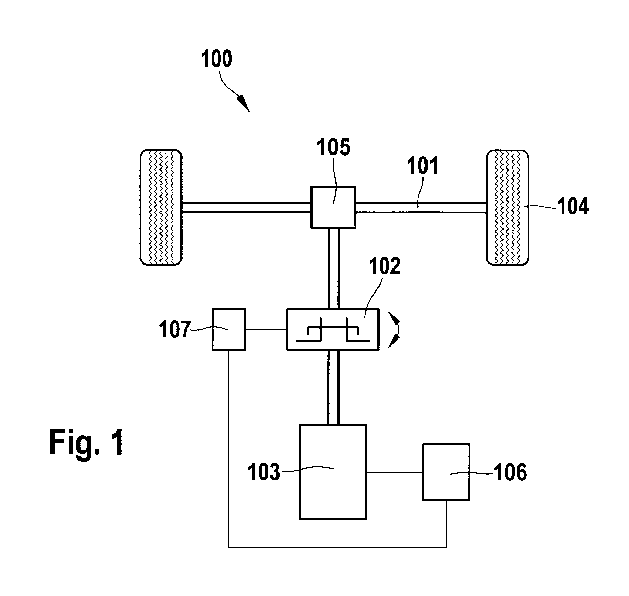

Es zeigt Figur 1
   eine Prinzipdarstellung eines Antriebes mit einer elektrisch antreibbaren Achse.
Figur 2
   ein Verfahren zum Betrieb einer elektrisch antreibbaren Achse.

### Ausführungsformen der Erfindung

Figur 1 zeigt eine Prinzipdarstellung eines Antriebes mit einer elektrisch antreibbaren Achse 100, welche eine elektrische Maschine 103 sowie eine elektrisch antreibbare Achse 101 mit den Antriebsrädern 104 sowie einem Differenzial 105 aufweist. Die mechanische Kopplung zwischen der elektrischen Maschine 103 sowie der elektrisch antreibbaren Achse 101 wird mittels eines schaltbaren Freilaufs 102 realisiert. Befindet sich der schaltbare Freilauf 102 in einer Übertragungsposition, so kann ein Drehmoment von der antreibbaren Achse 101 auf die elektrische Maschine 103 oder umgekehrt übertragen werden. Der Wechsel zwischen den Übertragungspositionen oder Sperrrichtungen erfolgt mittels des Aktors 107, wobei der Aktor 107 aktiv betrieben wird, um die Sperrrichtung des schaltbaren Freilaufes 102 für den Betriebszustand "Beschleunigen" bei Vorwärtsfahrt anzusteuern. Wenn der Aktor 107 nicht aktiv betrieben wird, wird selbsttätig mittels Rückstellfedern die Sperrrichtung des schaltbaren Freilaufes 102 für den Betriebszustand "Rekuperieren" angesteuert. Bei Rückwärtsfahrt ist die Ansteuerung des Aktors 107 bzgl. den Betriebszuständen des Fahrzeugs vertauscht. Ein Steuergerät 106 ist vorgesehen zur Ansteuerung des Aktors 107 und der elektrischen Maschine 103 sowie zur Überwachung der Drehzahlen elektrischen Maschine 103 und der antreibbaren Achse 101 und zur Durchführung des Überwachungskonzeptes.

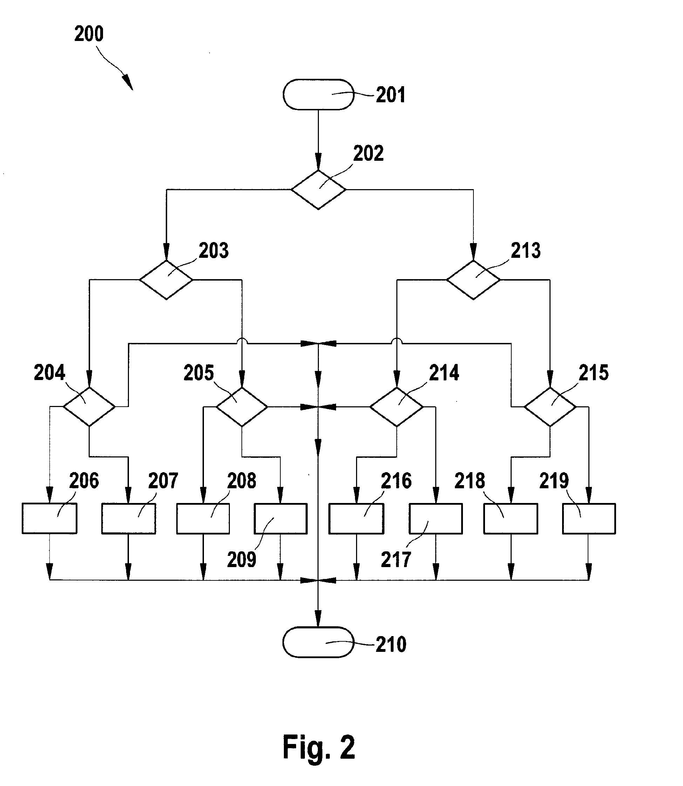

Figur 2 zeigt ein Verfahren zum Betrieb einer elektrisch antreibbaren Achse 200. In Schritt 201 wird das Verfahren gestartet. Anschließend wird in Schritt 202 die aktuelle Fahrtrichtung des Fahrzeugs abgefragt. Je nachdem, ob das Fahrzeug vorwärts oder rückwärts fährt verzweigt das Verfahren zu den Schritten 203 oder 213. Fährt das Fahrzeug vorwärts, so verzweigt das Verfahren zu Schritt 203. In Schritt 203 wird der Betriebszustand des Fahrzeugs abgefragt. In diesem Ausführungsbeispiel kann das System die Betriebszustände "Rekuperieren" und "Beschleunigen" erkennen. Wird in Schritt 203 der Betriebszustand "Beschleunigen" aktuell erkannt, so wird die Sperrrichtung des schaltbaren Freilaufs 102 derart angesteuert wird, dass eine Übertragung eines Drehmomentes von der elektrischen Maschine 103 auf die antreibbare Achse 101 möglich ist und das Verfahren verzweigt zu Schritt 205. In Schritt 205 wird der Freilaufzustand abgefragt. In diesem Ausführungsbeispiel kann das System die Freilaufzustände "Freilauf schließt nicht" und "Freilauf klemmt" erkennen. Je nachdem, welcher Freilaufzustand erkannt wird, verzweigt das Verfahren zu den Schritten 208 oder 209. Wird der Freilaufzustand "Freilauf klemmt" erkannt, verzweigt das Verfahren zu Schritt 208, in dem als Fehlerreaktion ein erster Notbetrieb bei stark eingeschränkter Geschwindigkeit eingestellt wird und eine Fehlermeldung ausgegeben wird, insbesondere an den Fahrer, und/oder eine entsprechende Eintragung im Fehlerspeicher vorgenommen wird. Wird in Schritt 205 der Freilaufzustand "Freilauf schließt nicht" erkannt, verzweigt das Verfahren zu Schritt 209, in dem als Fehlerreaktion ein zweiter Notbetrieb eingestellt wird und eine Fehlermeldung ausgegeben wird, insbesondere an den Fahrer, und/oder eine entsprechende Eintragung im Fehlerspeicher vorgenommen wird. Mit Schritt 210 endet das Verfahren. Während des Betriebes des Fahrzeugs wird dieses Verfahren stets wiederholt.

Wird in Schritt 203 alternativ der Betriebszustand "Rekuperieren" aktuell erkannt, so wird die Sperrrichtung des schaltbaren Freilaufs 102 derart angesteuert wird, dass eine Übertragung eines Drehmomentes von der antreibbaren Achse 101 auf die elektrischen Maschine 103 möglich ist und das Verfahren verzweigt zu Schritt 204. In Schritt 204 wird der Freilaufzustand abgefragt. In diesem Ausführungsbeispiel kann das System die Freilaufzustände "Freilauf schließt nicht" und "Freilauf klemmt" erkennen. Je nachdem, welcher Freilaufzustand erkannt wird, verzweigt das Verfahren zu den Schritten 206 oder 207. Wird der Freilaufzustand "Freilauf klemmt" erkannt, verzweigt das Verfahren zu dem Schritt 206, in dem als Fehlerreaktion ein erster Notbetrieb bei stark eingeschränkter Geschwindigkeit eingestellt wird und eine Fehlermeldung ausgegeben wird, insbesondere an den Fahrer, und/oder eine entsprechende Eintragung im Fehlerspeicher vorgenommen wird. Wird in Schritt 204 der Freilaufzustand "Freilauf schließt nicht" erkannt, verzweigt das Verfahren zu Schritt 207, in dem als Fehlerreaktion eine Fehlermeldung ausgegeben wird, insbesondere an den Fahrer, und/oder eine entsprechende Eintragung im Fehlerspeicher vorgenommen wird.

Wird in Schritt 202 erkannt, dass das Fahrzeug rückwärts fährt, verzweigt das Verfahren zu Schritt 213. In Schritt 213 wird der Betriebszustand des Fahrzeugs abgefragt. In diesem Ausführungsbeispiel kann das System die Betriebszustände "Rekuperieren" und "Beschleunigen" erkennen. Wird in Schritt 213 der Betriebszustand "Beschleunigen" aktuell erkannt, so wird die Sperrrichtung des schaltbaren Freilaufs 102 derart angesteuert wird, dass eine Übertragung eines Drehmomentes von der elektrischen Maschine 103 auf die antreibbare Achse 101 möglich ist und das Verfahren verzweigt zu Schritt 215. In Schritt 215 wird der Freilaufzustand abgefragt. In diesem Ausführungsbeispiel kann das System die Freilaufzustände "Freilauf schließt nicht" und "Freilauf klemmt" erkennen. Je nachdem, welcher Freilaufzustand erkannt wird, verzweigt das Verfahren zu den Schritten 218 oder 219. Wird der Freilaufzustand "Freilauf klemmt" erkannt, verzweigt das Verfahren zu dem Schritt 218, in dem als Fehlerreaktion ein erster Notbetrieb bei stark eingeschränkter Geschwindigkeit eingestellt wird und eine Fehlermeldung ausgegeben wird, insbesondere an den Fahrer, und/oder eine entsprechende Eintragung im Fehlerspeicher vorgenommen wird. Wird in Schritt 215 der Freilaufzustand "Freilauf schließt nicht" erkannt, verzweigt das Verfahren zu Schritt 219, in dem als Fehlerreaktion eine Fehlermeldung ausgegeben wird, insbesondere an den Fahrer, und/oder eine entsprechende Eintragung im Fehlerspeicher vorgenommen wird. Wiederum endet das Verfahren mit Schritt 210.

Wird in Schritt 213 alternativ der Betriebszustand "Rekuperieren" aktuell erkannt, so wird die Sperrrichtung des schaltbaren Freilaufs 102 derart angesteuert wird, dass eine Übertragung eines Drehmomentes von der antreibbaren Achse 101 auf die elektrischen Maschine 103 möglich ist und das Verfahren verzweigt zu Schritt 214. In Schritt 214 wird der Freilaufzustand abgefragt. In diesem Ausführungsbeispiel kann das System die Freilaufzustände "Freilauf schließt nicht" und "Freilauf klemmt" erkennen. Je nachdem, welcher Freilaufzustand erkannt wird, verzweigt das Verfahren zu den Schritten 216 oder 217. Wird der Freilaufzustand "Freilauf klemmt" erkannt, verzweigt das Verfahren zu dem Schritt 216, in dem als Fehlerreaktion ein erster Notbetrieb bei stark eingeschränkter Geschwindigkeit eingestellt wird und eine Fehlermeldung ausgegeben wird, insbesondere an den Fahrer, und/oder eine entsprechende Eintragung im Fehlerspeicher vorgenommen wird. Wird in Schritt 214 der Freilaufzustand "Freilauf schließt nicht" erkannt, verzweigt das Verfahren zu Schritt 217, in dem als Fehlerreaktion ein zweiter Notbetrieb eingestellt wird und eine Fehlermeldung ausgegeben wird, insbesondere an den Fahrer, und/oder eine entsprechende Eintragung im Fehlerspeicher vorgenommen wird.

Werden in den Schritten 204, 205, 214 und 215 die Freilaufzustände "Freilauf klemmt" und "Freilauf schließt nicht" nicht erkannt, so verzweigt das Verfahren direkt zu Schritt 210.

## Patentansprüche

1. Vorrichtung für ein Fahrzeug, welches eine elektrische Maschine (103) und eine von dieser elektrischen Maschine (103) antreibbare Achse (101) aufweist, wobei die Vorrichtung eine trennbare mechanische Kopplung umfasst, die zwischen der antreibbaren Achse (101) und der elektrischen Maschine (103) angeordnet ist, wobei die mechanische Kopplung als schaltbarer Freilauf (102) ausgebildet ist, **dadurch gekennzeichnet, dass** die Vorrichtung Mittel (106) zur Durchführung eines Überwachungskonzeptes umfasst, wobei in Abhängigkeit des Betriebszustandes des Fahrzeuges und in Abhängigkeit des Freilaufzustandes unterschiedliche Fehlerreaktionen ausgeführt werden.

2. Vorrichtung nach Anspruch 1, **dadurch gekennzeichnet, dass** mittels eines Aktors (107) die Sperrrichtung des schaltbaren Freilaufes (102) angesteuert wird.

3. Vorrichtung nach Anspruch 2, **dadurch gekennzeichnet, dass** der Aktor (107) betrieben wird, um die Sperrichtung des schaltbaren Freilaufes für den Betriebszustand beschleunigen" anzusteuern und der Aktor (107) nicht betrieben wird, um die Sperrichtung des schaltbaren Freilaufes für den Betriebszustand "Rekuperieren" anzusteuern.

4. Verfahren zur Durchführung eines Überwachungskonzeptes für ein Fahrzeug, welches eine elektrische Maschine (103) und eine von dieser elektrischen Maschine (103) antreibbare Achse (101) aufweist, wobei eine trennbare mechanische Kopplung zwischen der antreibbaren Achse (101) und der elektrischen Maschine (103) vorgesehen ist und die mechanische Kopplung als schaltbarer Freilauf (102) ausgebildet ist, dessen Sperrrichtung in Abhängigkeit des Betriebszustandes des Fahrzeugs angesteuert wird, **dadurch gekennzeichnet, dass** in Abhängigkeit des Betriebszustandes des Fahrzeuges und in Abhängigkeit des Freilaufzustandes unterschiedliche Fehlerreaktionen ausgeführt werden.

5. Verfahren nach Anspruch 4, **dadurch gekennzeichnet, dass** das Verfahren mindestens die Betriebszustände des Fahrzeugs beschleunigen" und "Rekuperieren" und die Freilaufzustände "Freilauf schließt nicht" und "Freilauf klemmt" erkennt.

6. Verfahren nach Anspruch 5, **dadurch gekennzeichnet, dass** das Verfahren während des Betriebszustandes des Fahrzeugs "Rekuperieren" den Freilaufzustand "Freilauf schließt nicht" derart erkennt, dass die Drehzahl der elektrischen Maschine (103), insbesondere bei elektrischer Belastung, nicht mit der Drehzahl der antreibbaren Achse (101) korreliert.

7. Verfahren nach Anspruch 5, **dadurch gekennzeichnet, dass** das Verfahren während des Betriebszustandes des Fahrzeugs "Rekuperieren" den Freilaufzustand "Freilauf klemmt" derart erkennt, dass bei kurzzeitigem Motorbetrieb der elektrischen Maschine (103) deren Drehzahl mit der Drehzahl der antreibbaren Achse (101) korreliert.

8. Verfahren nach Anspruch 7, **dadurch gekennzeichnet, dass** der kurzzeitige Motorbetrieb in periodischen Abständen bei unkritischen Fahrsituationen durchgeführt wird.

9. Verfahren nach Anspruch 5, **dadurch gekennzeichnet, dass** das Verfahren während des Betriebszustandes des Fahrzeugs "Rekuperieren" und bei Vorliegen eines Ereignissignals ein Bremsmoment an der antreibbaren Achse erzeugt wird, sodass der Aktor (107) betrieben wird, um die Sperrrichtung des schaltbaren Freilaufes für den Betriebszustand "Beschleunigen" anzusteuern.

10. Verfahren nach Anspruch 5, **dadurch gekennzeichnet, dass** das Verfahren während des Betriebszustandes des Fahrzeugs "Beschleunigen" den Freilaufzustand "Freilauf schließt nicht" derart erkennt, dass die Drehzahl der elektrischen Maschine (103) schnell ansteigt, insbesondere nicht mit der Drehzahl der antreibbaren Achse (101) korreliert.

11. Verfahren nach Anspruch 5, **dadurch gekennzeichnet, dass** das Verfahren während des Betriebszustandes des Fahrzeugs "Beschleunigen" den Freilaufzustand "Freilauf klemmt" derart erkennt, dass bei kurzzeitigem Motorbetrieb der elektrischen Maschine (103) deren Drehzahl nicht zunimmt, insbesondere mit der Drehzahl der antreibbaren Achse (101) korreliert, wobei der Aktor (107) dabei kurzzeitig nicht betrieben wird, um die Sperrrichtung des schaltbaren Freilaufes für den Betriebszustand des Fahrzeugs "Rekuperieren" anzusteuern.

12. Verfahren nach Anspruch 5, **dadurch gekennzeichnet, dass** das Verfahren während mindestens der Freilaufzustände "Freilauf schließt nicht" und Freilauf klemmt" als Fehlerreaktion eine Fehlermeldung ausgibt und/oder eine entsprechende Eintragung im Fehlerspeicher vornimmt.

13. Verfahren nach Anspruch 5, **dadurch gekennzeichnet, dass** das Verfahren während des Betriebszustandes des Fahrzeugs "Rekuperieren" und dem Freilaufzustand "Freilauf schließt nicht" als Fehlerreaktion eine Fehlermeldung an den Fahrer ausgibt.

14. Verfahren nach Anspruch 5, **dadurch gekennzeichnet, dass** das Verfahren während des Betriebszustandes des Fahrzeugs "Rekuperieren" und dem Freilaufzustand "Freilauf klemmt" als Fehlerreaktion einen ersten Notbetrieb bei stark eingeschränkter Geschwindigkeit einstellt.

15. Verfahren nach Anspruch 5, **dadurch gekennzeichnet, dass** das Verfahren während des Betriebszustandes des Fahrzeugs "Beschleunigen" und dem Freilaufzustand "Freilauf schließt nicht" als Fehlerreaktion einen zweiten Notbetrieb einstellt.

16. Verfahren nach Anspruch 5, **dadurch gekennzeichnet, dass** das Verfahren während des Betriebszustandes des Fahrzeugs beschleunigen" und dem Freilaufzustand "Freilauf klemmt" als Fehlerreaktion einen ersten Notbetrieb bei stark eingeschränkter Geschwindigkeit einstellt.

## Claims

1. Apparatus for a vehicle which has an electric machine (103) and an axle (101) which can be driven by this electric machine (103), wherein the apparatus comprises a separable mechanical clutch which is arranged between the driveable axle (101) and the electric machine (103), wherein the mechanical clutch is embodied as a switchable free wheel (102), **characterized in that** the apparatus comprises means (106) for carrying out a monitoring concept, wherein different fault reactions are carried out as a function of the operating state of the vehicle and as a function of the state of the free wheel.

2. Apparatus according to Claim 1, **characterized in that** the locking direction of the switchable free wheel (102) is actuated by means of an actuator (107).

3. Apparatus according to Claim 2, **characterized in that** the actuator (107) is operated in order to actuate the locking direction of the switchable free wheel for the "accelerate" operating state, and the actuator (107) is not operated in order to actuate the locking direction of the switchable free wheel for the "recuperate" operating state.

4. Method for carrying out a monitoring concept for a vehicle which has an electric machine (103) and axle (101) which can be driven by this electric machine (103), wherein a separable mechanical clutch is provided between the driveable axle (101) and the electric machine (103), and the mechanical clutch is embodied as a switchable free wheel (102), the locking direction of which is actuated as a function of the operating state of the vehicle, **characterized in that** different fault reactions are carried out as a function of the operating state of the vehicle and as a function of the state of the free wheel.

5. Method according to Claim 4, **characterized in that** the method detects at least the "accelerate" and "recuperate" operating states of the vehicle, and the "free wheel does not close" and "free wheel sticking" states of the free wheel.

6. The method according to Claim 5, **characterized in that** during the "recuperate" operating state of the vehicle the method detects the "free wheel does not close" state of the free wheel in such a way that the rotational speed of the electric machine (103) does not correlate with the rotational speed of the driveable axle (101), in particular in the case of electrical loading.

7. Method according to Claim 5 **characterized in that** during the "recuperate" operating state of the vehicle the method detects the "free wheel sticking" state of the free wheel in such a way that in the case of a brief engine operating mode of the electric machine (103) the rotational speed thereof correlates with the rotational speed of the driveable axle (101).

8. Method according to Claim 7, **characterized in that** the brief engine operating mode is carried out at brief intervals in uncritical driving situations.

9. Method according to Claim 5, **characterized in that** during the "recuperate" operating state of the vehicle and when an event signal is present the method generates a braking torque at the driveable axle with the result that the actuator (107) is operated in order to actuate the locking direction of the switchable free wheel for the "accelerate" operating state.

10. Method according to Claim 5, **characterized in that** during the "accelerate" operating state of the vehicle the method detects the "free wheel does not close" state of the free wheel in such a way that the rotational speed of the electric machine (103) rises quickly, and in particular does not correlate with the rotational speed of the driveable axle (101).

11. Method according to Claim 5, **characterized in that** during the "accelerate" operating state of the vehicle the method detects the "free wheel sticking" state of the free wheel in such a way that in the case of the brief engine operating mode of the electric machine (103), the rotational speed of which does not increase, the method correlates in particular with the rotational speed of the driveable axle (101), wherein the actuator (107) is not operated for a brief time here in order to actuate the locking direction of the switchable free wheel for the "recuperate" operating state of the vehicle.

12. Method according to Claim 5, **characterized in that** during at least the "free wheel does not close" and "free wheel sticking" state of the free wheel the method outputs a fault message as a fault reaction and/or makes a corresponding entry in the fault memory.

13. Method according to Claim 5, **characterized in that** during the "recuperate" operating state of the vehicle and the "free wheel does not close" state of the free wheel the method outputs a fault message to the driver as a fault reaction.

14. Method according to Claim 5, **characterized in that** during the "recuperate" operating state of the vehicle and the "free wheel sticking" state of the free wheel the method sets a first emergency operating mode as a fault reaction when the speed is severely limited.

15. Method according to Claim 5, **characterized in that** during the "accelerate" operating state of the vehicle and the "free wheel does not close" state of the free wheel the method sets a second emergency operating mode as a fault reaction.

16. Method according to Claim 5, **characterized in that** during the "accelerate" operating state of the vehicle and the "free wheel sticking" state of the free wheel the method sets a first emergency operating mode as a fault reaction when the speed is severely limited.

## Revendications

1. Dispositif pour un véhicule comportant un moteur électrique (103) et un essieu (101) pouvant être entraîné par ce moteur électrique (103), le dispositif comprenant un accouplement mécanique séparable disposé entre l'essieu (101) pouvant être entraîné et le moteur électrique (103), l'accouplement mécanique prenant la forme d'une roue libre (102) pouvant être connectée, **caractérisé en ce que** le dispositif comprend des moyens (106) de mise en oeuvre d'un concept de surveillance, différentes réactions aux anomalies étant réalisées en fonction de l'état de fonctionnement du véhicule et en fonction de l'état de roue libre.

2. Dispositif selon la revendication 1, **caractérisé en ce que** la direction de blocage de la roue libre (102) connectable est commandée à l'aide d'un actionneur (107).

3. Dispositif selon la revendication 2, **caractérisé en ce que** l'actionneur (107) est entraîné pour commander la direction de blocage de la roue libre connectable pour l'état de fonctionnement d'« accélération » et que l'actionneur (107) n'est pas entraîné pour commander la direction de blocage de la roue libre connectable pour l'état de fonctionnement de « récupération ».

4. Procédé de mise en oeuvre d'un concept de surveillance pour un véhicule comportant un moteur électrique (103) et un essieu (101) pouvant être entraîné par ce moteur électrique (103), un accouplement mécanique séparable étant prévu entre l'essieu (101) pouvant être entraîné et le moteur électrique (103) et l'accouplement mécanique prenant la forme d'une roue libre (102) pouvant être connectée dont la direction de blocage est commandée en fonction de l'état de fonctionnement du véhicule, **caractérisé en ce que** des réactions aux anomalies différentes sont réalisées en fonction de l'état de fonctionnement du véhicule et en fonction de l'état de roue libre.

5. Procédé selon la revendication 4, **caractérisé en ce que** le procédé identifie au moins les états de fonctionnement du véhicule d'« accélération » et de « récupération » ainsi que les états de roue libre de « roue libre ne fermant pas » et de « roue libre coincée ».

6. Procédé selon la revendication 5, **caractérisé en ce que** le procédé identifie pendant l'état de fonctionnement du véhicule de « récupération », l'état de roue libre de « roue libre ne fermant pas » de telle sorte que la vitesse de rotation du moteur électrique (103), notamment en cas de charge électrique, n'est pas corrélée à la vitesse de rotation de l'essieu (101) pouvant être entraîné.

7. Procédé selon la revendication 5, **caractérisé en ce que** le procédé identifie pendant l'état de fonctionnement du véhicule de « récupération » l'état de roue libre de « roue libre coincée » de telle sorte qu'en présence d'un fonctionnement bref du moteur, le moteur électrique (103) mette en corrélation sa vitesse de rotation avec la vitesse de rotation de l'essieu (101) pouvant être entraîné.

8. Procédé selon la revendication 7, **caractérisé en ce que** le fonctionnement bref du moteur est réalisé à des distances périodiques lors de situations de conduite non cruciales.

9. Procédé selon la revendication 5, **caractérisé en ce que** le procédé observé pendant l'état de fonctionnement du véhicule de « récupération » et en présence d'un signal d'événement produit un couple de freinage au niveau de l'essieu pouvant être entraîné, de sorte que l'actionneur (107) est entraîné pour commander la direction de blocage de la roue libre connectable pour l'état de fonctionnement d'« accélération ».

10. Procédé selon la revendication 5, **caractérisé en ce que** le procédé identifie pendant l'état de fonctionnement du véhicule d'« accélération » l'état de roue libre de « roue libre ne fermant pas » de telle sorte que la vitesse de rotation du moteur électrique (103) augmente rapidement, notamment de façon non corrélée avec la vitesse de rotation de l'essieu (101) pouvant être entraîné.

11. Procédé selon la revendication 5, **caractérisé en ce que** le procédé identifie pendant l'état de fonctionnement du véhicule d'« accélération » l'état de roue libre de « roue libre coincée » de telle sorte qu'en cas de fonctionnement bref de moteur du moteur électrique (103), sa vitesse de rotation n'augmente pas, notamment en corrélation avec la vitesse de rotation de l'essieu (101) pouvant être entraîné, l'actionneur (107) n'étant en l'occurrence pas entraîné pendant une durée brève pour commander la direction de blocage de la roue libre connectable pour l'état de fonctionnement du véhicule de « récupération ».

12. Procédé selon la revendication 5, **caractérisé en ce que** le procédé envoie au moins pendant les états de roue libre de « roue libre ne fermant pas » et de « roue libre coincée » comme réaction aux anomalies un message d'anomalie et/ou réalise une inscription correspondante dans la mémoire de référencement des anomalies.

13. Procédé selon la revendication 5, **caractérisé en ce que** le procédé envoie au conducteur pendant l'état de fonctionnement du véhicule de « récupération » et l'état de roue libre de « roue libre ne fermant pas » un message d'anomalie comme réaction aux anomalies.

14. Procédé selon la revendication 5, **caractérisé en ce que** le procédé met en place pendant l'état de fonctionnement du véhicule de « récupération » et l'état de roue libre de « roue libre coincée » comme réaction aux anomalies un premier fonctionnement d'urgence en cas de vitesse fortement limitée.

15. Procédé selon la revendication 5, **caractérisé en ce que** le procédé met en place pendant l'état de fonctionnement du véhicule d'« accélération » et l'état de roue libre de « roue libre ne fermant pas » comme réaction aux anomalies un deuxième fonctionnement d'urgence.

16. Procédé selon la revendication 5, **caractérisé en ce que** le procédé met en place pendant l'état de fonctionnement du véhicule d'« accélération » et l'état de roue libre de « roue libre coincée » comme réaction aux anomalies un premier fonctionnement d'urgence en cas de vitesse fortement limitée.
